# EUROPÄISCHE PATENTSCHRIFT

(11) **EP 0 948 943 B1**
(45) Veröffentlichungstag und Bekanntmachung des Hinweises auf die Patenterteilung: **10.05.2006**
(21) Anmeldenummer: 99104975.0
(22) Anmeldetag: 12.03.1999
(51) Int. Cl.: A61C 5/12

(54) **Matrize**
Matrix
Matrice

(30) Priorität: 08.04.1998 DE 19815847
(43) Veröffentlichungstag der Anmeldung: 13.10.1999
(73) Patentinhaber: Ivoclar Vivadent AG, 9494 Schaan (LI)
(72) Erfinder: Kunkel, Peter, 9495 Triesen (LI)
(74) Vertreter: Baronetzky, Klaus

(56) Entgegenhaltungen:
- US-A- 3 795 052
- US-A- 3 890 714
- US-A- 4 305 707

## Beschreibung

Die Erfindung betrifft eine Matrize gemäß dem Oberbegriff von Anspruch 1.

Eine derartige Matrize ist beispielsweise aus der DE-OS 38 16 501 bekannt. Eine derartige Matrize weist ein Band auf, das in den Zwischenraum zwischen zwei Zähnen einführbar ist. An dem Band angeformt ist ein Keil, der dazu dient, das Band an den zu füllenden Zahl anzudrücken.

Derartige Matrizen werden eingesetzt, wenn approximale Kavitäten zu füllen sind. Während sich zentrale Kavitäten in der Regel gleichmäßig und mit gutem Anschluß an das umgebende Dentin bzw. den Zahnschmelz füllen lassen, simuliert bei approximalen Kavitäten das Matrizenband das umgebende Dentin bzw. den umgebenden Zahnschmelz und soll hierdurch zur Realisierung einer gut angeschlossenen und insbesondere randspaltenfreien Füllung beitragen.

Es ist auch bekannt, z.B aus der US 4,305,707, die Matrizenbänder über Matrizenspanner ringförmig um den zu füllenden Zahn verlaufen zu lassen und das meist metallische Band auf diese Weise fest an dem zu füllenden Zahn anliegen zu lassen.

Die bislang verwendeten Matrizen haben jedoch den Nachteil, daß die Anlage des Matrizenbandes an den zu füllenden Zahn in dem Bereich der Kavität unbefriedigend ist. Insbesondere, wenn - wie es für die Erstellung einer guten Füllung unerläßlich ist - der Zahnarzt Druck auf die Oberseite der Füllung ausübt, weicht das Matrizenband leicht seitlich aus, so daß es zu Scherkräften in der Füllung kommt, die die Qualität der Füllung beeinträchtigen.

Obwohl sich über Matrizenspanne ein Ausweichen des Matrizenbandes verhindern läßt, ist das Füllungsergebnis häufig so, daß eine intensive Nachbearbeitung erforderlich ist. Eine intensive Nachbearbeitung ist andererseits im Hinblick auf die Randspaltenbildung ungünstiger, denn nur ein unmittelbarer Druck auf die Füllung erlaubt einen perfekten Randanschluß, der auch eine visuelle Kontrolle ermöglicht und bereits deswegen bevorzugt ist.

Ein Beispiel für ein Matrizenband mit Matrizenspanner ist die aus der US-PS 5,330,353 bekannte Lösung. Um den Randanschluß zu verbessern, ist es versucht worden, dem Matrizenband eine besondere, leicht gebogene Form zu geben. Nachdem die Zahnformen der Patienten eines Zahnarztes und sogar die Zahnformen der unterschiedlichen Molaren und Prämolaren eines Patienten unterschiedlich sind, kann eine derartige spezielle Formgebung stets nur einen Kompromiß darstellen.

Demgegenüber ist es Aufgabe der Erfindung, eine Matrize gemäß dem Oberbegriff von Anspruch 1 zu schaffen, die für das Füllen approximaler Kavitäten besonders gut geeignet ist und insbesondere eine verbesserte Handhabbarkeit mit der Verminderung der Wahrscheinlichkeit von Randspaltenbildungen verbindet.

Diese Aufgabe wird erfindungsgemäß durch Anspruch 1 gelöst. Vorteilhafte Weiterbildungen ergeben sich aus den Unteransprüchen.

Erfindungsgemäß ist ein Matrizenband mit einem Matrizenkeil in einer besonderen Art und Weise miteinander kombiniert. Der Keil wird über das Gelenk auf die von der zu füllenen approximalen Kavität abgewandte Seite des Bandes geschwenkt und vermag sich dort an dem benachbarten Zahn abzustützen. Auf diese Weise wird besonders wirksam Druck auf das Band ausgeübt, das damit eine verbesserte Abstützung gegenüber dem vom Zahnarzt aufgebrachten und in die Füllung eingeleiteten Kräften bewirkt.

Wahlweise läßt sich der Keil mit dem erfindungsgemäßen Band an die rechte oder die linke Seite des Bandes verschwenken, je nachdem, ob die approximale Kavität medial oder distal bzw. rechts oder links im Mund des Patienten liegt.

Bevorzugt läßt sich der Keil mit seinem zugehörigen Führungskörper an dem Band mit seinem zugehörigen Haltekörper einrasten, bevor der Keil eingeführt wird. Auf diese Weise steht eine guc handhabbar vorbereitete Matrize zur Verfügung, die dennoch flexibel einsetzbar ist.

Bevorzugt erstreckt sich der Keil in Arbeitsstellung, also in eingerastetem Zustand, etwa im Bereich der Unterkante des Bandes. Eine Seitenfläche kann an dem Band flächig anliegen, während sich seine gegenüberliegende Seitenfläche an dem benachbarten Zahn abstützen kann. In dieser Position drückt der benachbarte Zahn über die Seitenfläche und den Keil auf das Matrizenband, das wiederum damit an der approximalen Kavität überraschend gut anliegt.

Das Gelenk kann grundsätzlich in beliebiger geeigneter Weise ausgebildet sein. Bevorzugt ist ein Verbindungsstreifen zwischen dem Haltekörper und dem Führungskörper vorgesehen, der eine Art Filmscharnier bildet und zudem elastisch ist, so daß die Einrastung des Führungskörpers an dem Haltekörper über eine gewisse Vorspannung erfolgt. Bevorzugt weist der Haltekörper an seinem vorderen/oberen Ende eine knopfartige Verstärkung auf. Mit dieser Verstärkung läßt sich vom Zahnarzt besonders günstig Druck beim Einführen der Matrize in den Zahnzwischenraum ausüben.

Grundsätzlich ist es auch möglich, die erfindungsgemäße Matrize mit einem Matrizenspanner zu kombinieren, wobei ein Ende des Bandes, das von dem Haltekörper abgewandt ist, mit einem Spannglied versehen werden müßte, das an dem Haltekörper ein hakbar und beispielsweise über eine Schraube spannbar ist.

Gemäß einer besonders günstigen Ausgestaltung der Erfindung ist es vorgesehen, dass ein Führungskörper für die Lagerung des Keils gegenüber einem Haltekörper für die Lagerung des Bandes einrastbar gelagert ist.

Gemäß einer weiteren besonders günstigen Ausgestaltung der Erfindung ist es vorgesehen, daß ein Haltekörper für die Lagerung des Bandes eine dem Keil zugewandte Rastspitze aufweist, an welcher ein Führungskörper für den Keil nach Belieben des Benutzers auf einer Seite einrastbar ist.

Gemäß einer weiteren besonders günstigen Ausgestaltung der Erfindung ist es vorgesehen, daß der Keil und ein Führungskörper des Keils sich in entspanntem Zustand in der Verlängerung des Bandes erstreckt und seitlich, insbesondere über mehr als 180°, abbiegbar ist.

Gemäß einer besonders günstigen Ausgestaltung der Erfindung ist es vorgesehen, daß der Keil ein seitliches Vorsprungmaß aufweist, das in der Arbeitsstellung des Keils des Vorsprungmaß des haltekörpers des Bandes gegenüber dem Band mindestens teilweise kompensiert.

Gemäß einer besonders günstigen Ausgestaltung der Erfindung ist es vorgesehen, daß ein Haltekörper für das Band, ein Führungskörper für den Keil und der keil einstückig aus Kunststoff, insbesondere aus Polypropylen oder Polyäthylen, ausgebildet ist.

Weitere Vorteile, Einzelheiten und Merkmale ergeben sich aus der nachfolgenden Beschreibung eines Ausführungsbeispiels der Erfindung anhand der Zeichnungen.

Es zeigen:
Fig. 1 eine perspektivische Ansicht einer Ausführungsform einer erfindungsgemäßen Matrize in der Grundstellung;
Fig. 2 eine perspektivische Ansicht der Matrize gemäß Fig. 1, jedoch in der Arbeitsstellung; und
Fig. 3 eine Vorderansicht der Matrize in der Ausführungsform gemäß Fig. 2.

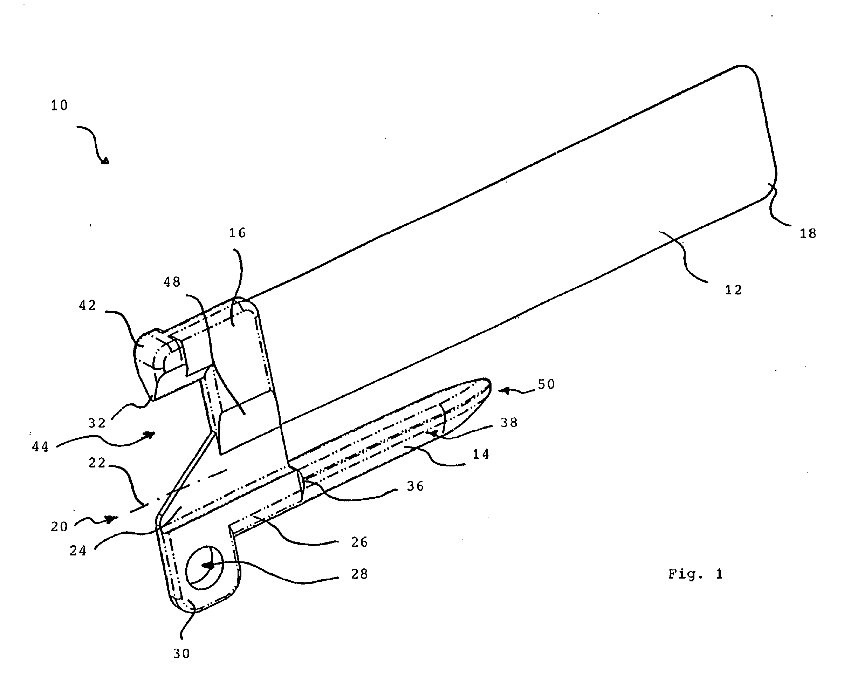

Die in Fig. 1 dargestellte Ausführungsform einer Matrize 10 weist ein Matrizenband 12 und einen Keil 14 auf. Das Band 12 ist in einem Haltekörper 16 gelagert. Es besteht aus einem Metallstreifen und ist an seinem Ende 18 je abgerundet, wobei es grundsätzlich auch möglich ist, anstelle eines Metallstreifens einen Kunststoffstreifen zu verwenden.

Zur Verankerung des Bandes 12 in dem Haltekörper 16 sind in den Figuren nicht dargestellte Durchbrechungen im Übergangsbereich vorgesehen. Die Herstellung der Matrize erfolgt bevorzugt in der Weise, daß das Band 12 in die Form für die Herstellung des Haltekörpers - und des Keils 14 - eingelegt und das Band 12 umspritzt wird, so daß die Durchbrechungen mit dem Kunststoffmaterial des Haltekörpers 16 gefüllt sind.

Der Haltekörper 16 ist über ein Gelenk 20 mit dem Keil 14 verbunden. Das Gelenk 20 weist eine schematisch angedeutete Gelenkachse 22 auf, die sich im wesentlichen parallel zum Band 12 und zum Keil 14 erstreckt. In dem dargestellten Ausführungsbeispiel besteht es aus einem Verbindungsstreifen 24 aus dem gleichen Kunststoff wie der Keil 14 und der Haltekörper 16.

Gemäß einer modifizierten Ausgestaltung ist das Gelenk 20 als reines Filmscharnier ausgebildet; gemäß einer weiter modifizierten Ausgestaltung ist eine Zapfen/Buchsen-Verbindung zur Realisierung des Gelenks vorgesehen, die an dem Haltekörper 16 elastisch gelagert ist.

Der Keil 14 ist über einen Führungskörper 26 mit dem Gelenk verbunden. Der Führungskörper 26 erstreckt sich in der Verlängerung des Keils 14 und ist in besonderer Weise ausgebildet. Der Führungskörper 26 weist eine Durchtrittsausnehmung 28 auf, in welche Zahnseide oder ein Faden oder dergleichen einführbar ist, um ein Verschlucken der Matrize durch den Patienten jedenfalls sicher zu verhindern. Der Führungskörper 26 weist ferner einen Vorsprung 30 auf, der für den Eingriff an einer Rastspitze 32 des Haltekörpers 16 bestimmt ist.

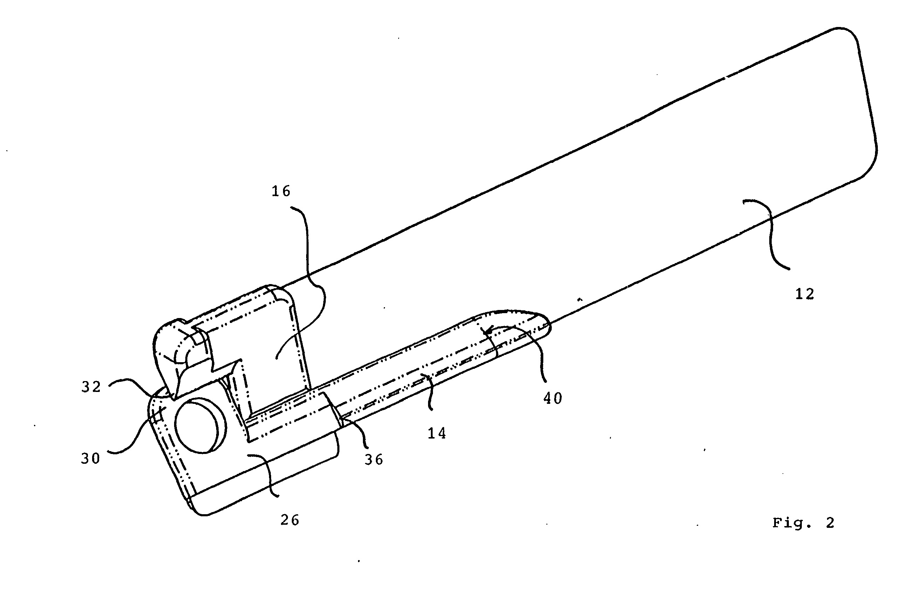

Während Fig. 1 die entspannte Grundstellung der erfindungsgemäßen Matrize zeigt, zeigt Fig. 2 eine der beiden Arbeitsstellungen. In dieser Stellung ist der Führungskörper 26 und der Keil 14 bezogen auf den Haltekörper 16 und das Band 12 um das Gelenk 20 nach oben geschwenkt, so daß der Vorsprung 30 die Rastspitze 32 hintergreift. Der Verbindungsstreifen 24 ist hierzu so dünn gehalten, daß er eine ausreichende Elastizität aufweist, daß ein entsprechendes Verschwenken möglich ist, aber andererseits so dick, daß die Arbeitsstellung gemäß Fig. 2 mit einer gewissen Sicherheitsreserve eingehalten wird, auch wenn die Matrize 10 in einen Zahnzwischenraum eingeführt wird.

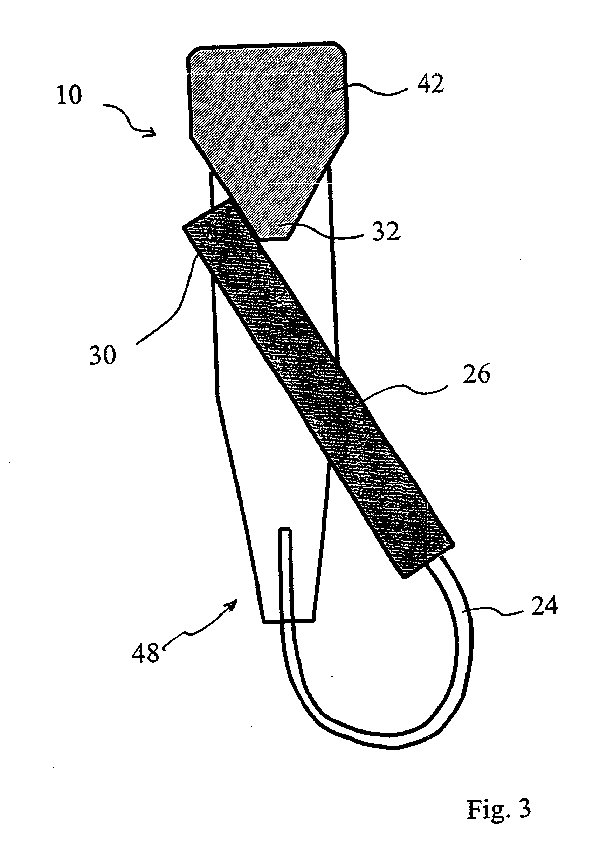

Der Verbindungsstreifen 24 nimmt in der Arbeitsstellung gemäß Figs. 2 und 3 eine Bogenform an, wobei sich die Bogenform über etwas mehr als 180° erstreckt. Gegenüber der Grundstellung ist der Führungskörper 26 um etwa 210° verschwenkt und liegt mit einer gewissen Überlappung an der Rastspitze 32 an.

Zum Lösen der Arbeitsstellung und zum Überführen in die Grundstellung wird der Vorsprung 30 kurzerhand gegen die elastische Wirkung des Verbindungsstreifens 24 nach unten gedrückt, so daß er von der Rastspitze 32 freigegeben wird.

Wie aus den Figuren 1 und 2 ersichtlich ist, weist der Keil 14 ein gewisses Vorsprungmaß 36 gegenüber dem Führungskörper 26 auf. Dieses Vorsprungmaß erlaubt ein sicheres Anliegen des Keils 14 mit einer Seitenfläche 38 an dem Band 12. Die gegenüberliegende Seitenfläche 40 ist dann für die Anlage an dem benachbarten Zahn bestimmt.

Wie aus den Figuren 1 und 2 ersichtlich ist, weist der Haltekörper 16 zudem eine knopfartige Verstärkung 42 auf, deren Breite die Breite sowohl des Führungskörpers 26 als auch des Haltekörpers 16 beträchtlich übersteigt und mit welcher besonders gut Druck von oben/vorne auf die Matrize 10 in der Arbeitsstellung ausübbar ist.

Wie aus Fig. 1 ersichtlich ist, weist der Haltekörper 16 unterhalb der Rastspitze 32 eine Ausnehmung 44 auf, die von dem Führungskörper 26 in der Arbeitsstellung gemäß Fig. 2 durchtreten wird. Zur Anpassung und zur Vermeidung von Kerbwirkungen ist der Verbindungsstreifen 24 in seiner - bezogen auf die Gelenkachse 22 - axialen Länge je an den Führungskörper 26 und den Haltekörper 16 angepaßt. Diese Ausgestaltung erlaubt eine sichere Verankerung gerade bei einstückiger Ausbildung von Haltekörper 16, Verbindungsstreifen 24, Führungskörper 26 und Keil 14. Es versteht sich, daß der Haltekörper 16 so schlank ausgebildet ist, daß ein Anschwenken des Führungskörpers 26 ohne weiteres möglich ist. Bevorzugt weist er hierzu eine Abschrägung 48 auf, die einen breiten Übergang zwischen der Breite des Haltekörpers 16 und der Breite des Verbindungsstreifens 24 ermöglicht und zudem ein verkantungsfreies Anschwenken des Führungskörpers 26 ermöglicht.

Der Keil 14 ist in günstiger geeigneter Weise ausgebildet. Bevorzugt erstrecken sich seine Seitenflächen 38 und 40 in einem Winkel von etwa 60° zueinander, wobei es sich versteht, daß der Winkel und die genaue Ausformung in weiten Bereichen an die jeweiligen Erfordernisse anpaßbar sind.

Bevorzugt weist der Keil 14 jedenfalls je abgerundete Kanten und Ecken auf und läuft in einer Einführspitze 50 aus, die ebenfalls allseitig abgerundet ist.

Die erfindungsgmäße Matrize 10 ist auch zur vielfachen Verwendung geeignet, nachdem ihre glatte und inneneckenfreie Oberfläche besonders leicht gereinigt werden kann. Sie ist auch sterilisierbar und autoklavierbar.

Die knopfartige Verstärkung 42 erleichtert nicht nur das Einschieben des Keils 14, indem der Zahnarzt mit einem Finger Druck ausübt, um den Keil in einen Zahnzwischenraum einzuführen, sondern auch das Entfernen des Keils 14. Hierzu kann der Zahnarzt die Verstärkung leicht mit einem Werkzeug wie einer Zange greifen und den Keil 14 herausziehen. Alternativ kann er auch mit einem Haken oder einer Schlinge z.B. aus Zahnseide die Durchtrittsausnehmung 28 für das Herausziehen verwenden.

## Patentansprüche

1. Matrize, mit einem Band für das Umspannen eines Zahnes beim Füllen einer approximalen Kavität, und mit einem an dem Band beweglich befestigten Keil für die Ausübung von Druck in einem Zahnzwischenraum, **dadurch gekennzeichnet, daß** der Keil gegenüber dem Band um eine Gelenkachse schwenkbar ist und sich in entspanntem Zustand in der Grundstellung in Verlängung des Bandes parallel zur Gelenkachse (22) erstreckt, und in eine Arbeitsstellung seitlich des als streifenförmiges Bauteil ausgebildeten Bandes (12) bringbar ist.

2. Matrize nach Anspruch 1, **dadurch gekennzeichnet, dass** die Gelenkachse (22) Teil eines von einem Haltkörper (16) gebildeten Gelenks (20) gebildet ist und der Haltekörper (16) mit einem freien Ende des Bandes (12) verbunden ist.

3. Matrize nach einem der vorhergehenden Ansprüche, **dadurch gekennzeichnet, daß** das Gelenk (20) als Filmscharnier ausgebildet ist.

4. Martize nach einem der vorhergehenden Ansprüche, **dadurch gekennzeichnet, dass** sich der Keil in Verlängerung eines Führungskörpers (26) erstreckt, der gegenüber dem Haltekörper (26) gelenkig gelagert ist.

5. Matrize nach einem der Ansprüche 2 bis 5, **dadurch gekennzeichnet, daß** ein Führungskörper (26) für die Lagerung des Keils (14) gegenüber einem Haltekörper (16) für die Lagerung des Bandes (12) einrastbar gelagert ist.

6. Matrize nach einem der vorhergehenden Ansprüche, **dadurch gekennzeichnet, daß** ein Haltekörper (16) für die Lagerung des Bandes (12) eine dem Keil (14) zugewandte Rastspitze (32) aufweist, an welcher ein Führungskörper (26) für den Keil (14) nach Belieben des Benutzers auf einer Seite einrastbar ist.

7. Matrize nach einem der vorhergehenden Ansprüche, **dadurch gekennzeichnet, daß** unterhalb einer Rastspitze (32) des Haltekörpers (16) für das Band (12) eine Ausnehmung (44) vorgesehen ist, die von einem Führungskörper (26) für den Keil (14) durchtretbar ist.

8. Matrize nach einem der vorhergehenden Ansprüche, **dadurch gekennzeichnet, daß** der Keil (14) und ein Führungskörper (26) des Keils (14) sich in entspanntem Zustand in der Verlängerung des Bandes (12) erstreckt und seitlich, insbesondere über mehr als 180°, abbiegbar ist.

9. Matrize nach einem der vorhergehenden Ansprüche, **dadurch gekennzeichnet, daß** sich zwischen einem Haltekörper (16) für das Band (12) und einem Führungskörper (26) für den Keil (14) ein elastischer Verbindungsstreifen (24) erstreckt, der in seiner axialen Länge je an die axiale Länge des Haltekörpers (16) und des Führungskörpers (26), betrachtet in Gelenkachsenrichtung, angepaßt ist.

10. Matrize nach einem der vorhergehenden Ansprüche, **dadurch gekennzeichnet, daß** die Matrize (10), insbesondere ein Führungskörper (26) des Keils (14), eine Durchtrittsausnehmung (44) aufweist, in welche Zahnseide oder dergleichen zur unverlierbaren Sicherung der Matrize (10) einführbar und die als Rückhalt für ein Werkzeug einsetzbar ist.

11. Matrize nach einem der vorhergehenden Ansprüche, **dadurch gekennzeichnet, daß** der Keil (14) symmetrisch ausgebildet ist und eine Einführspitze (50) und Seitenflächen (38,40) aufweist, die ein beidseitiges Anlegen an das Band (12) erlauben.

12. Matrize nach einem der Ansprüche 2 bis 12, **dadurch gekennzeichnet, daß** der Keil (14) ein seitliches Vorsprungmaß (36) aufweist, das in der Arbeitsstellung des Keils (14) das Vorsprungmaß des Haltekörpers (16) des Bandes (12) gegenüber dem Band (12) mindestens teilweise kompensiert.

13. Matrize nach einem der vorhergehenden Ansprüche, **dadurch gekennzeichnet, daß** ein Haltekörper (16) des Bandes (12) an seinem vorderen/oberen Ende eine knopfartige Verstärkung (42) aufweist.

14. Matrize nach einem der vorhergehenden Ansprüche, **dadurch gekennzeichnet, daß** ein Haltekörper (16) für das Band (12), ein Führungskörper (26) für den Keil (14) und der Keil (14) einstückig aus Kunststoff, insbesondere aus Polypropylen oder Polyäthylen, ausgebildet sind.

15. Matrize nach einem der vorhergehenden Ansprüche, **dadurch gekennzeichnet, daß** das Band (12) als Metallband ausgebildet ist, das im Bereich seines Haltekörpers (16) Durchbrechungen aufweist, die von dem Material des Haltekörpers (16) durchtreten sind.

## Claims

1. A matrix with a band to be clamped around a tooth when filling an approximal cavity, and with a wedge movably mounted on the band for exerting pressure in an interdental space, **characterised in that** the wedge is pivotable about an axis of articulation relative to the band and in the relaxed condition in the normal position extends in extension of the band parallel to the axis of articulation (22), and in an operative position can be disposed laterally of the band (12) in the form of a strip-like component.

2. A matrix according to Claim 1, **characterised in that** the axis of articulation (22) is formed by part of an articulation (20) formed by a retaining member (16) and the retaining member (16) is connected to a free end of the band (12).

3. A matrix according to any one of the preceding Claims, **characterised in that** the articulation (20) is in the form of a film hinge.

4. A matrix according to any one of the preceding Claims, **characterised in that** the wedge extends in extension of a guide member (26) which is pivotably mounted relative to the retaining member (26) [sic].

5. A matrix according to any one of Claims 2 to 5, **characterised in that** a guide member (26) for the mounting of the wedge (14) is mounted locatably relative to a retaining member (16) for the mounting of the band (12).

6. A matrix according to any one of the preceding claims, **characterised in that** a retaining member (16) for mounting the band (12) has a locating tip (32) which faces the wedge (14) and on which a guide member (26) for the wedge (14) can be located on one side, as desired by the user.

7. A matrix according to any one of the preceding Claims, **characterised in that** a recess (44) is provided under the locating tip (32) of the retaining member (16) for the band (12), through which recess a guide member (26) for the wedge (14) can pass.

8. A matrix according to any one of the preceding Claims, **characterised in that** the wedge (14) and a guide member (26) for the wedge (14) extends in the relaxed condition in extension of the band (12) and can be bent laterally, in particular through more than 180°.

9. A matrix according to any one of the preceding Claims, **characterised in that** an elastic connecting strip (24) extends between a retaining member (16) for the band (12) and a guide member (26) for the wedge (14), which connecting strip is adapted in its axial length in each case to the axial length of the retaining member (16) and of the guide member (26), viewed in the direction of the axis of articulation.

10. A matrix according to any one of the preceding Claims, **characterised in that** the matrix (10), in particular a guide member (26) for the wedge (14), has a passage recess (44), in which dental floss or the like can be introduced for the captive locking of the matrix (10) and which can be used as a retaining means for an implement.

11. A matrix according to any one of the preceding Claims, **characterised in that** the wedge (14) is of symmetrical design and has an insertion tip (50) and lateral surfaces (38,40) which enable it to be applied on either side against the band (12).

12. A matrix according to any one of Claims 2 to 12, **characterised in that** the wedge (14) has a degree of lateral projection (36) which in the operative position of the wedge at least partly compensates for the degree of projection of the retaining member (16) of the band (12) relative to the band (12).

13. A matrix according to any one of the preceding Claims, **characterised in that** a retaining member (16) of the band (12) has a button-like thickened portion (42) at its front/upper end.

14. A matrix according to any one of the preceding Claims, **characterised in that** a retaining member (16) for the band (12), a guide member (26) for the wedge (14) and the wedge (14) are formed in one-piece from plastics material, in particular from polypropylene or polyethylene.

15. A matrix according to any one of the preceding Claims, **characterised in that** the band (12) is in the form of a metal band which in the vicinity of its retaining member (16) has openings through which the material of the retaining member (16) penetrate.

## Revendications

1. Matrice, avec une bande pour ceindre une dent lors de l'obturation d'une cavité proximale, et avec un coin attaché de manière mobile à la bande pour exercer une pression dans un espace interdentaire, **caractérisée en ce que** le coin peut pivoter par rapport à la bande autour d'un axe d'articulation et, en position relâchée, s'étend dans la position initiale dans le prolongement de la bande parallèlement à l'axe d'articulation (22) et, en position de travail, peut être déplacé du côté de la bande (12) conçue en tant qu'élément en forme de ruban.

2. Matrice selon la revendication 1, **caractérisée en ce que** l'axe d'articulation (22) fait partie d'une articulation (20) formée par un corps de support (16) et le corps de support (16) est couplé à une extrémité libre de la bande (12).

3. Matrice selon l'une quelconque des revendications précédentes, **caractérisée en ce que** l'articulation (20) est conçue sous forme de charnière intégrée.

4. Matrice selon l'une quelconque des revendications précédentes, **caractérisée en ce que** le coin s'étend dans le prolongement d'un corps de guidage (26) qui est situé de manière articulée face au corps de support (26).

5. Matrice selon l'une quelconque des revendications 2 à 5, **caractérisée en ce qu'**un corps de guidage (26) pour positionner le coin (14) est situé de manière encliquetable face à un corps de support (16) pour positionner la bande (12).

6. Matrice selon l'une quelconque des revendications précédentes, **caractérisée en ce qu'**un corps de support (16) pour positionner la bande (12) présente une pointe d'encliquetage (32) tournée vers le coin (14), sur laquelle un corps de guidage (26) pour le coin (14) peut s'encliqueter sur un côté au gré de l'utilisateur.

7. Matrice selon l'une quelconque des revendications précédentes, **caractérisée en ce qu'**un évidement (44) est prévu en dessous d'une pointe d'encliquetage (32) du corps de support (16) pour la bande (12), dans lequel un corps de guidage (26) pour le coin (14) peut venir se loger.

8. Matrice selon l'une quelconque des revendications précédentes, **caractérisée en ce que** le coin (14) et un corps de guidage (26) du coin (14) s'étendent, en position relâchée, dans le prolongement de la bande (12) et peuvent être pliés latéralement, en particulier à plus de 180°.

9. Matrice selon l'une quelconque des revendications précédentes, **caractérisée en ce qu'**une bande de couplage élastique (24) s'étend entre un corps de support (16) pour la bande (12) et un corps de guidage (26) pour le coin (14), laquelle est adaptée, dans sa longueur axiale, à la longueur axiale du corps de support (16) et à celle du corps de guidage (26), vu dans le sens de l'axe d'articulation.

10. Matrice selon l'une quelconque des revendications précédentes, **caractérisée en ce que** la matrice (10), en particulier un corps de guidage (26) du coin (14), présente un trou traversant (44), dans lequel un fil dentaire ou analogue peut être introduit pour fixer la matrice (10) de manière imperdable et qui peut être utilisé en tant qu'élément de retenue pour un outil.

11. Matrice selon l'une quelconque des revendications précédentes, **caractérisée en ce que** le coin (14) est conçu de manière symétrique et présente une pointe d'introduction (50) et des surfaces latérales (38, 40) qui permettent un appui bilatéral sur la bande (12).

12. Matrice selon l'une quelconque des revendications 2 à 11, **caractérisée en ce que** le coin (14) présente une butée en saillie (36) latérale qui, en position de travail du coin (14), compense au moins en partie la butée en saillie du corps de support (16) de la bande (12) par rapport à la bande (12).

13. Matrice selon l'une quelconque des revendications précédentes, **caractérisée en ce qu'**un corps de support (16) de la bande (12) présente, au niveau de son extrémité avant/supérieure, un renforcement (42) en forme de bossage.

14. Matrice selon l'une quelconque des revendications précédentes, **caractérisée en ce qu'**un corps de support (16) pour la bande (12), un corps de guidage (26) pour le coin (14) et le coin (14) sont formés d'une seule pièce de matière plastique, en particulier de polypropylène ou de polyéthylène.

15. Matrice selon l'une quelconque des revendications précédentes, **caractérisée en ce que** la bande (12) est conçue sous forme de bande métallique qui, dans la zone de son corps de support (16), présente des renfoncements qui sont traversés par le corps de support (16).
